(19) Europäisches Patentamt
European Patent Office
Office européen des brevets

(11) Publication number: 0 228 272 A2

(12) EUROPEAN PATENT APPLICATION

(21) Application number: 86310025.1

(22) Date of filing: 22.12.86

(51) Int. Cl.[4]: C 07 C 125/073
C 08 F 138/00

(30) Priority: 23.12.85 US 812492

(43) Date of publication of application: 08.07.87 Bulletin 87/28

(84) Designated Contracting States: DE FR GB

(71) Applicant: GTE LABORATORIES INCORPORATED
100 West 10th Street
Wilmington, DE 19800 (US)

(72) Inventor: Sandman, Daniel J.
18 Arborwood Road
Acton Mass. 01720 (US)

Samuelson, Lynne A.
59 Rangeley Road
Newton Mass. 02165 (US)

(74) Representative: Moore, Anthony John et al
Gee & Co. Chancery House Chancery Lane
London WC2A 1QU (GB)

# (54) Preparation of urethane substituted diacetylene monomers and polymers.

(57) Synthesis of urethane substituted diacetylenes of the formula $R-NHOCO(CH_2)_4-C\equiv C-C\equiv C-(CH_2)_nOCONH-R$ where n is an integer of from 1 to 20, $R = CH_3(CH_2)_m(COOCH_2)_p$, $C_6H_5(CH_2)_m(COOCH_2)_p$, $C_6H_{11}(CH_2)_m(COOCH_2)_p$, or $C_{10}H_7-(CH_2)_m(COOCH_{2p}$, where m is an integer of from 0 to 11 and p is 0 or 1. The compounds are free of impurities resulting from dehydration of diols of the formula $HO-(CH_2)_nC\equiv C-C\equiv C-(CH_2)-OH$. The compounds are produced by first reacting an isocyanate of the formula R-NCO with an alcohol of the formula $HC\equiv C-(CH_2)_n-OH$, then oxidatively coupling the resulting urethane substituted monoacetylenic compound in the presence of an amine-basic copper salt complex, preferably by bubbling oxygen through the solution. The diaceylenes are polymerized to form the polydiacetylenes. Also disclosed are the monomers and polymers produced.

EP 0 228 272 A2

**Description**

PREPARATION OF URETHANE SUBSTITUTED DIACETYLENE MONOMERS AND POLYMERS

The present invention relates to the synthesis of urethane substituted diacetylene compounds and polymers and more particularly to preparation of such compounds having a high degree of purity. The present invention also relates to the improved, high purity compounds prepared thereby.

Diacetylene compounds, and more particularly the polydiacetylene compounds derived therefrom and having conjugated backbone structures, form a valuable class of compounds which may be obtained as fully ordered single crystals. These diacetylenes and polydiacetylenes have been found to be of value, for example, in such fields as nonlinear optical elements, photoconductors, time-temperature indicators, thermochromic laser-writing applications, colored photoresist, and memories. For many of these applications, the purity of the compounds used to obtain such crystals is becoming increasingly important.

The diacetylenes and polydiacetylenes having urethane side chains are an especially interesting and important subclass of these compounds, and are of utility in the fields noted above. Prior to the present invention, the urethane substituted diacetylene monomers have been synthesized, as described in U.S. Patent No. 4,220, 747 to Preziosi et al. by reacting the corresponding diyne-ol or diyne-diol with an isocyanate having the desired end group to form the mono- or bis-urethane derivatives of the diacetylene. In turn, the required diyne-ol or diyne-diol has been prepared, for example, by the oxidative coupling of the corresponding alkyne. Thus the steps in the prior art method of synthesis have proceeded from the acetylene to the diacetylene and thus to the urethane substituted diacetylene. However, it has been found that samples of the urethane substituted diacetylene monomers, when synthesized according to prior art methods, are contaminated with impurities, the effects of which are becoming increasingly important as more sophisticated devices are developed. For example, mass spectrometry of the solid monomers of the urethane substituted diacetylene compounds derived from 5,7-dodecadiyne-1,12-diol reveal an impurity at m/e 352. This impurity may be assigned the following structure:

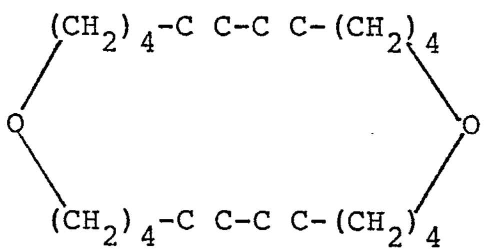

and can arise from isocyanate induced dehydration of the 5,7-dodecadiyne-1,12-diol. Other impurities have been isolated from the compounds prepared according to prior art methods. For example, the impurity diphenylurea has been found in diacetylene compounds prepared using phenyl isocyanate, a known dehydrating reagent.

In recent years, much interest has been shown in the optical properties of urethane substituted polydiacetylenes, for example those in the form of relatively large single crystal thin films of these polydiacetylenes. However, it has been difficult to take full advantage of the potential of these polymers due to the difficulty of obtaining impurity-free urethane substituted diacetylene monomer samples.

According to one aspect of the present invention is provided a process for producing a diacetylene compound of the formula $R\text{-}NHOCO(CH_2)_n\text{-}C\equiv C\text{-}C\equiv C\text{-}(CH_2)_nOCONH\text{-}R$ where n is an integer of from 1 to 20, R is selected from the group consisting of $CH_3(CH_2)_m(COOCH_2)_p$, $C_6H_5(CH_2)_m\text{-}(COOCH_2)_p$, $C_6H_{11}(CH_2)_m(COOCH_2)_p$ and $C_{10}H_7(CH_2)_m(COOCH_2)_p$, where m is an integer of from 0 to 11 and p is 0 or 1 and where the compound is substantially free of the products of dehydration of a diol of the formula $HO\text{-}(CH_2)_n\text{-}C\equiv C\text{-}C\equiv C\text{-}(CH_2)_n\text{-}OH$ comprising the steps of reacting an organic isocyanate of the formula R-NCO with a monoacetylenic alcohol of the formula $HC\equiv C\text{-}(CH_2)_nOH$ to produce a urethane substituted monoacetylenic compound of the formula $R\text{-}NHOCO(CH_2)_n\text{-}C\equiv CH$; and oxidatively coupling the urethane substituted monoacetylenic compound in solution in the presence of an amine-basic copper salt complex and oxygen.

According to another aspect of the invention, the step of reacting the organic isocyanate with the monoacetylene alcohol in the process described above is carried out in the presence of triethylamine. According to yet another aspect of the invention the step of oxidatively coupling the urethane substituted monoacetylenic compound in the first-described process above is carried out in an inert atmosphere.

According to still another aspect of the invention, in any of the above described processes the amine-basic cuprous salt complex may include N,N,N',N'-tetramethyl-ethylenediamine and cuprous chloride, the solution is a methanol solution and the oxygen is present in the form of gaseous oxygen bubbled through the solution for a time sufficient to effect the coupling reaction.

Any of the above processes may be followed by an additional step of polymerizing the diacetylene compound produced by these processes by 1,4-addition solid-state polymerization to produce a polymerized

form of the diacetylene compound, the polymer having the formula:

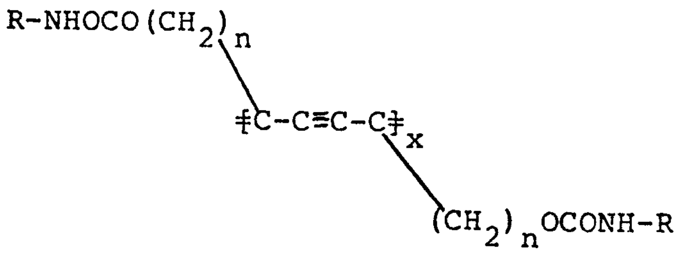

Also provided, according to another aspect of the invention, is a urethane substituted diacetylene compound prepared according to the first described process above and having the formula R-NHOCO$(CH_2)_n$-C≡C-C≡C-$(CH_2)_n$-OCONH-R, where n and R are as defined in the first-described process above and where the compound is substantially free of the products of dehydration of a diol of the formula HO-$(CH_2)_n$-C≡C-C≡C-$(CH_2)_n$-OH. According to other aspects of the invention are provided diacetylene compounds according to the compound described immediately above, where n = 9, R = $C_6H_{11}$ and the diacetylene compound is a bis-cyclohexyl urethane of 10,12-docosadiyne-1,22-diol; and where n = 4 and the mass spectrum of the compound exhibits substantially no indication of impurity at m/e 352, including a bis-ethyl urethane of 5,7-dodecadiyne-1,12-diol in which R = $CH_3CH_2$, a bis-phenyl urethane of 5,7-dodecadiyne-1,12-diol in which R = $C_6H_5$, a bis-cyclohexyl urethane of 5,7-dodecadiyne-1,12-diol in which R = $C_6H_{11}$, and a bis-n-butoxycarbonyl methylurethane of 5,7-dodecadiyne-1,12-diol in which R = $CH_2COO(CH_2)_3CH_3$.

Also provided, according to the present invention, are diacetylene polymers produced by 1,4-addition solid-state polymerization of the above diacetylene compounds.

As described above, the present invention involves synthesis of the desired urethane substituted polydiacetylene monomers. These monomers may then be polymerized to provide highly desirable, exceptionally pure polydiacetylenes for the applications described above. The monomer synthesis is a two step procedure involving synthesis of a urethane substituted monoacetylenic intermediate compound which then may be oxidatively coupled to provide the urethane substituted diacetylene monomers of the invention. This two step process avoids the production of undesirable impurities created during the reaction between diacetylene alcohol and isocyanates and which are a direct result of isocyanate induced dehydration of the diacetylenic alcohol.

The polymers of these high purity diacetylenes may be prepared by known methods, for example by exposing the monomer to radiation, heat or pressure.

The processes and the monomeric and polymeric compounds of the present invention may be better understood by referring to the following Examples.

## EXAMPLE 1

Preparation of the phenylurethane of 5-hexyn-1-ol.

To 5-hexyn-1-ol (1.0 g, 10.2 mmole) was added phenyl isocyanate (4.6 mmole). The mixture was heated on a hot plate for ca. ten minutes and then placed in an ice bath for ca. thirty minutes. The solid was recrystallized from carbon tetrachloride to give the desired product, which had a melting point of 53-54°C and a 30% yield. Analysis: Calculated for $C_{13}H_{15}O_2N$: C, 71.87; H, 6.95; N, 6.45. Found: C, 72.20; H, 7.29; N, 6.45.

Preparation of the bis-phenyl urethane of 5,7-dodecadiyne-1,12-diol (TCDU Monomer) and its polymer.

To a mixture of N,N,N' N'-tetramethylethylenediamine (2 mmole) and cuprous chloride (3 mmole) in methanol (10ml) at room temperature under argon, was added dropwise a solution of the phenyl urethane of 5-hexyn-1-ol (4.75 g, 22 mmole) in methanol (25 ml). Oxygen was bubbled into the reaction mixture for twenty hours. To the deep blue mixture was added 5N HC1 (9 ml) and a white precipitate resulted. This solid was isolated by suction filtration, washed with water followed by ether, and vacuum dried to give a 70% yield of TCDU monomer, identified by its infrared spectrum and x-ray powder pattern. The mass spectrum of TCDU monomer prepared in this manner exhibited a molecular ion at m/e 432; no impurity could be detected at m/e 352.

TCDU monomer prepared as above was converted to poly-TCDU in known manner. The x-ray powder pattern of the poly-TCDU sample revealed the same phase as that found by V. Enkelmann and J.B. Lando (Acta Crystallogr., B34 2352 (1978)).

## EXAMPLE 2

Preparation of the ethyl urethane of 5-hexyn-1-ol.

A mixture of 5-hexyn-1-ol, (20 mmole), ethyl isocyanate (10 mmole) and triethylamine (10 drops) were heated on a hot plate for ca. ten minutes to give an orange liquid. Volatiles were distilled off of this liquid to give

an orange liquid residue whose neat infrared spectrum exhibited the following significant absorption: 3340, 3295, 2980, 2940, 2870, 2110, 1695, 1525, 1465, 1450, 1425, 1240, 1140, 1075, 1020, 770, 760, and 625 $cm^{-1}$.

Preparation of the bis-ethyl urethane of 5,7-dodecadiyne-1,12-diol (ETCD Monomer) and its polymer.

A solution of the ethyl urethane of 5-hexyn-1-ol (3.4 g, 20 mmole) in methanol (20 ml) was added to a mixture of N,N,N' N'-tetramethylethylenediamine (2 mmole) and cuprous chloride (3 mmol) in methanol (10 ml). Oxygen was bubbled through the mixture for almost twenty hours. The 5N HC1 (9 ml) was added to the reaction mixture with stirring and a white precipitate resulted. The latter was isolated by suction filtration and vacuum dried to give ETCD monomer (60% yield, m.p. 123-124.5°C), identified by its infrared spectrum and x-ray powder pattern. The mass spectrum revealed a molecular ion at m/e 336 and no indication of a impurity at m/e 352.

The ETCD monomer was converted to polymer in known manner. The x-ray powder pattern of the poly-ETCD sample was that expected for the room temperature phase, as reported by R.R. Chance et al. (J. Chem. Phys., 67, 3616 (1977)).

EXAMPLE 3

Preparation of the cyclohexyl urethane of 5-hexyn-1-ol.

Cyclohexyl isocyanate (5 ml., 4.90 g, 39 mmole) was pipetted into a mixture of 5-hexyn-1-ol (10.0 g, 102 mmole) and triethylamine (15 drops). The mixture was heated on a hot plate for ten minutes and allowed to cool in a refrigerator. A white solid (5.96 g, 68% yield, m.p. 59-62°C) was isolated by suction filtration. The mass spectrum exhibited a molecular ion at m/e 223. The infrared spectrum exhibited, inter alia, absorption at 3426, 3285, 2104, 1690 and 1520 $cm^{-1}$.

Analysis: Calculated for $C_{13}H_{21}NO_2$: C, 69.92, H, 9.48; N, 6.27. Found: C, 70.30; H, 9,34; N, 6.23.

Preparation of the bis-cyclohexyl urethane of 5,7-dodecadiyne-1,12-diol.

A solution of the cyclohexyl urethane of 5-hexyn-1-ol (2.2 gm, 10 mmole) in methanol (10 ml.) was added to a mixture of N,N,N' N'-tetramethylethylenediamine (0.12 gm. 1 mmol) and cuprous chloride (0.124 gm, 1.2 mmol). Oxygen gas was bubbled through the stirred mixture for at least 16 hours. The reaction mixture was poured into 5N HC1 (10 ml.) and the reaction product was recrystallized from ethyl acetate to give white needles, 1.12 g (51% at yield), m.p. 155-156°C. The mass spectrum exhibited a molecular ion at m/e 444. Analysis: Calculated for $C_{26}H_{40}N_2O_4$: C, 70.24; H, 9.07; N, 6.30. Found: C, 72.84; H, 9.70; N, 6.31. A second sample was prepared by the same method and analyzed. Found: C,70.40; H,9.14; N,6.27. The monomer can be converted to the polymer by $^{60}Co$ gamma radiation.

EXAMPLE 4

Preparation of the bis-n-butoxycarbonyl methylurethane of 5,7-dodecadiyne-1,12-diol (4 BCMU) monomer and polymer.

A mixture of 5-hexyn-1-ol (10 g, 102 mmole) , butyl isocyanoacetate (13.36 g, 85 mmol) and triethylamine (10 drops) was heated on a hot plate for 15 minutes; the mixture turned orange. Distillation of the liquid at 80°C (10 mm) gave 2.05 gm. recovered 5-hexyn-1-ol and an orange residue (19.3 gm, 87% yield) whose infrared spectrum lacked the 2250 $cm^{-1}$ absorption of the isocyanate group. A methanol (15 ml) solution of the monoacetylene (5.08 g, 20 mmol) was added to a mixture of N,N,N' N'-tetramethylethylenediamine (0.24 g, 2.0 mmol), cuprous chloride (0.248 g, 2.5 mmol) and methanol (35 ml). Oxygen was bubbled through the mixture for 18 1/2 hours. The mixture was poured into 5N HC1 (20 ml) and this was extracted with four 50 ml portions of ether. The ether was washed with water and aqueous $Na_2CO_3$, dried over $MgSO_4$, and evaporated under reduced pressure. The residue was crystallized from an acetone-hexane mixture, and the monomer (m.p. 69-70°C) was converted to poly4BCMU by $^{60}Co$ gamma radiation. The infrared spectrum exhibited absorption at, inter alia, 3320, 2960, 2870, 1760, 1690, 1535, 1475, 1455, 1435, 1415, 1375, 1305, 1285, 1260 and 1190 $cm^{-1}$.

Analysis: Calculated for $C_{26}H_{40}N_2O_8$: C,61.40; H,7,93; N,5.51. Found: C,60,19; H,7.70; N,5.50.

EXAMPLE 5

Preparation of the cyclohexylurethane of 10-undecyn-1-ol.

Cyclohexyl isocyanate (0.98 g, 8 mmol), 10-undecyn-1-ol (3.36 g, 20 mmol) and triethylamine (15 drops) were mixed and heated on a hot plate for twenty minutes; the mixture turned yellow. On cooling to room temperature for over an hour, a white solid crystallized. The solid was isolated by suction filtration to give 0.707 g (30% yield), m.p. 58-61°C. The mass spectrum showed the expected molecular ion at m/e 293. The infrared spectrum exhibited absorption at, inter alia, 3320, 3290, 2115, 1735, 1690 and 1535 $cm^{-1}$.

Analysis: Calculated for $C_{18}H_{31}NO_2$: C, 73.67; H, 10.65; N, 4.77. Found: C, 73.67; H, 11.11; N, 3.38. A second sample was prepared by the same method and analyzed. Found: C,73.16; H,10.63; N,4.33.

Preparation of the 1,22 bis-cyclohexylurethane of 10,12-docosadiyne-1,22-diolmonomer and polymer.

A solution of the cyclohexyl urethane of 10-undecyn-1-ol (4.40g, 15 mmole) in methanol (30ml) was added to a mixture of cuprous chloride (0.30mg. 3 mmole) and N,N,N' N'-tetramethylethylenediamine (0.45g. 3.9 mmole) in methanol (50 ml). Oxygen was bubbled through the stirred mixture for 2 hours. To this mixture was added 0.6N HC1 (100 ml). A white solid was filtered off, and was washed with 0.6N HC1 (100 ml) followed by cold ethanol (50 ml). After vacuum drying, the crude solid (3.6g, 80% yield, m.p. 112-113°C) lacked the infrared absorption due to the precursor monoacetylene at 3285 and 2120 $cm^{-1}$. This material was crystallized from ethyl acetate to give 3.06g (70% yield) of a white solid, m.p. 115.5-116.5°C, thermally stable melt. The infrared spectrum of the monomer shows absorption at, inter alia, 3310, 1690, 1540, 1315, 1280, 1255, 1235, 1070, 1060 and 1045 $cm^{-1}$. Exposure of the monomer to $^{60}Co$ gamma radiation leads to a polymer with over 95% conversion.

Analysis: Calculated for $C_{36}H_{60}O_4N_2$: C, 73.93; H,10.34; N,4.79. Found: C,73.33; H,10.17; N,4.33.

## Claims

1. A process for producing a diacetylene compound of the formula

$R\text{-}NHOCO(CH_2)_n\text{-}C{\equiv}C\text{-}C{\equiv}C\text{-}(CH_2)_nOCONH\text{-}R$

where n in an integer of from 1 to 20, R is selected from 1 to 20, R is selected from the group consisting of $CH_3(CH_2)_m(COOCH_2)_p$, $C_6H_5(CH_2)_m(COOCH_2)_p$, $C_6H_{11}(CH_2)_m(COOCH_2)_p$ and $C_{10}H_7(CH_2)_m(COOCH_2)_p$, where m is an integer of from 0 to 11 and p is 0 or 1 and where the compound is substantially free of the products of dehydration of a diol of the formula $HO\text{-}(CH_2)_n\text{-}C{\equiv}C\text{-}C{\equiv}C\text{-}(CH_2)_n\text{-}OH$, comprising the steps of:

reacting an organic isocyanate of the formula R-NCO with a monoacetylenic alcohol of the formula $HC{\equiv}C\text{-}(CH_2)_n\text{-}OH$ to produce a urethane substituted monoacetylenic compound of the formula $R\text{-}NHOCO(CH_2)_n0C{\equiv}CH$; and

oxidatively coupling the urethane substituted monoacetylenic compound in solution in the presence of an amine-basic copper salt complex and oxygen.

2. A process according to claim 1 where the reacting of the organic isocyanate with the monoacetylenic alcohol is carried out in the presence of triethylamine.

3. A process according to claim 1 or 2 where the oxidation coupling of the urethane substituted monoacetylenic compound is carrout out in an inert atmosphere.

4. A process according to claim 1, 2 or 3 where the amine-basic copper salt complex includes N,N,N' ,N'-tetramethylethylenediamine and cuprous chloride, the solution is a methanol solution and the oxygen is present in the form of gaseous oxygen bubbled through the solution for a time sufficient to effect the coupling reaction.

5. A process for producing a polymerized form of the diacetylene compound of claim 1 having the formula

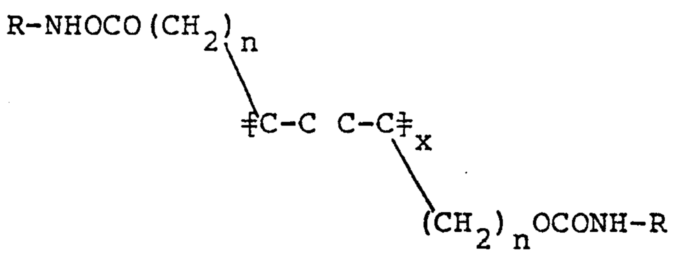

where n and R are as defined in claim 1 comprising the steps of:

reacting an organic isocyanate of the formula R-NCO with a monoacetylenic alcohol of the formula $HC{\equiv}C\text{-}(CH_2)_n\text{-}OH$ to produce a urethane substituted monoacetylenic compound of the formula $R\text{-}NHOCO(CH_2)_n\text{-}C{\equiv}CH$;

oxidatively coupling the urethane substituted monoacetylenic compound in solution in the presence of an amine-basic copper salt complex and oxygen;

isolating the diacetylene compound; and

polymerizing the diacetylene compound by 1,4-addition solid-state polymerization.

6. A urethane substituted diacetylene compound prepared according to the process of claim 1, 2, 3 or 4 and having the formula

$R\text{-}NHOCO(CH_2)_n\text{-}C{\equiv}C\text{-}C{\equiv}C\text{-}(CH_2)_nOCONH\text{-}R$

where n and R are as defined in claim 1 and where the compound is substantially free of the products of dehydration of a diol of the formula $HO\text{-}(CH_2)_n\text{-}C{\equiv}C\text{-}C{\equiv}C\text{-}(CH_2)_n\text{-}OH$.

7. A diacetylene compound according to claim 6 where n=9, $R\text{-}C_6H_{11}$ and the diacetylene compound is a bis-cyclohexyl urethane of 10,12-docosadiyne-1,22-diol.

8. A diacetylene compound according to claim 6 where n = 4 and where the mass spectrum of the compound exhibits substantially no indication of impurity at m/e 352.

9. A diacetylene compound according to claim 8 where $R = CH_3CH_2$ and the diacetylene compound is a bisethyl urethane of 5,7-dodecadiyne-1,12-diol.

10. A diacetylene compound according to claim 8 where $R = C_6H_5$ and the diacetylene compound is a bis-phenyl urethane of 5,7-dodecadiyne-1,12-diol.

11. A diacetylene compound according to claim 8 where $R = C_6H_{11}$ and the diacetylene compound is a biscyclohexyl urethane of 5,7-dodecadiyne-1,12-diol.

12. A diacetylene compound according to claim 8 where $R = CH_2COO(CH_2)_3CH_3$ and the diacetylene compound is a bis-n-butoxycarbonyl methylurethane of 5,7-dodecadiyne-1,12-diol.

13. A diacetylene polymer produced by 1,4-addition solid-state polymerization of the diacetylene compound according to claim 6, 7, 9, 10, 11 or 12.